# EUROPÄISCHE PATENTSCHRIFT

(11) **EP 3 183 289 B1**
(45) Veröffentlichungstag und Bekanntmachung des Hinweises auf die Patenterteilung: **10.10.2018**
(21) Anmeldenummer: 15781289.2
(22) Anmeldetag: 21.08.2015
(51) Int. Cl.: C08J 5/18, B29D 7/00, B29C 41/26, B29C 41/28, B65G 69/20, D21H 11/18, D21H 11/20, H05B 3/36

(54) **VERFAHREN ZUR HERSTELLUNG EINES PRODUKTES AUS EINEM NANOFASERN ENTHALTENDEN BIOPLASTIK**
PROCESS FOR THE PREPARATION OF A PRODUCT FROM A BIOPLASTIC COMPRISING NANO-FIBRE
PROCÉDÉ POUR LA PRÉPARATION D'UN PRODUIT À PARTIR D'UN BIOPLASTIQUE COMPRENANT DES NANOFIBRES

(30) Priorität: 22.08.2014 AT 505822014
(43) Veröffentlichungstag der Anmeldung: 28.06.2017
(73) Patentinhaber: Berndorf Band GmbH, 2560 Berndorf (AT)
(72) Erfinder: BADER, Dieter, A-2560 Berndorf (AT); LESTERL, Markus, A-4060 Leonding (AT)
(74) Vertreter: Burger, Hannes
(86) Internationale Anmeldenummer: PCT/AT2015/050202
(87) Internationale Veröffentlichungsnummer: WO 2016/025973

(56) Entgegenhaltungen:
- WO-A1-2014/071523
- WO-A2-2013/060934
- DE-A1-102005 042 398
- DE-A1-102011 119 645
- FR-A- 1 571 605
- US-A- 2 839 651
- US-A1- 2005 121 437
- US-A1- 2010 124 651
- "SHALLOW CASING FOR SOLVENT CASTING EQUIPMENT", RESEARCH DISCLOSURE, MASON PUBLICATIONS, HAMPSHIRE, GB, Nr. 359, 1. März 1994 (1994-03-01), Seite 111, XP000439941, ISSN: 0374-4353
- Harald F. Krug ET AL: "Nanopartikel", RÖMPP Online, Version 3.37, 1. Juni 2011 (2011-06-01), Seiten 1-5, XP055092623, Gefunden im Internet: URL:https://roempp.thieme.de/roempp4.0/do/ data/RD-14-02250 [gefunden am 2013-12-10]
- Andreas Detzel ET AL: "Untersuchungen der Umweltwirkungen von Verpackungen aus biologisch abbaubaren Kunststoffen", , 1. Oktober 2012 (2012-10-01), Seiten 5-8, XP055239810, Dessau-Roßlau (DE) Gefunden im Internet: URL:http://www.umweltbundesamt.de/sites/de fault/files/medien/publikation/long/3986.p df [gefunden am 2016-01-11]

## Beschreibung

Die Erfindung betrifft ein Verfahren zur Herstellung eines Produktes aus einem Nanofasern enthaltenden Bioplastik gemäß dem Oberbegriff von Anspruch 1.

Unter Nanofasern enthaltendem Bioplastik bzw. Biokunststoff werden in dem vorliegenden Zusammenhang Kunststoffe verstanden, die auf Nanofasern natürlich nachwachsender Rohstoffe basieren. Derartige Kunststoffe können beispielsweise aus Biopolymeren hergestellt werden. Von besonderer Bedeutung ist in diesem Zusammenhang Nanozellulose geworden. Unter Nanofasern werden in diesem Dokument Fasern mit einem Faserdurchmesser von weniger als 1 µm verstanden. Bevorzugt weisen die Nanofasern im Rahmen der vorliegenden Erfindung eine Länge von bis zu 30 µm auf.

Aus der WO2013/060934 A2 ist ein Verfahren der eingangs genannten Art bekannt geworden. Bei dem bekannten Verfahren wird zur Herstellung eines Filmes eine Nanocellulose enthaltende Suspension auf die Oberfläche eines Trägermaterials aufgesprüht. Hierauf wird der Film getrocknet und von dem Trägermaterial abgelöst. Nachteilig an dem bekannten Verfahren ist es vor allem, dass es sich hierbei um einen "Roll to Roll" Prozess handelt, bei welchem das Trägermaterial von einer Speicherrolle abgewickelt und nach Gebrauch wieder auf einer Rolle aufgewickelt wird. Wenn das Trägermaterial vollständig von der Speicherrolle abgewickelt ist muss eine neue Speicherrolle eingesetzt werden. Das Wechseln der Speicherrolle ist relativ arbeitsaufwändig. Darüber hinaus kommt es zu einer Unterbrechung des Herstellungsprozesses. Ein Verfahren gemäß dem Oberbegriff von Anspruch 1 ist aus der US2010/124651 bekannt geworden.

Es ist daher eine Aufgabe der Erfindung, die oben genannten Nachteile des Stands der Technik zu überwinden.

Diese Aufgabe wird mit einem Verfahren der eingangs genannten Art erfindungsgemäß durch die in dem kennzeichnenden Teil von Anspruch 1 angegebenen Maßnahmen gelöst.

Die erfindungsgemäße Lösung erlaubt eine kontinuierliche und unterbrechungsfreie Herstellung eines Filmes oder eines anderen Produktes, beispielsweise einer Platte, aus Biokunststoff. Somit lässt sich die Produktivität bei der Herstellung von Produkten aus Bioplastik wesentlich erhöhen. Auch können im Gegensatz zu dem bekannten Verfahren auf einfache Weise Bahnen aus Nanofasern enthaltendem Bioplastik in beliebiger Länge hergestellt werden. Durch den kontinuierlichen Herstellungsprozess lässt sich auch auf einfache Weise eine gleichbleibende Qualität des hergestellten Produktes gewährleisten. Das verwendete Endlosband kann aus jedem geeigneten Material hergestellt sein, so kann das Endlosband beispielsweis aus Metall, Verbundwerkstoffen, wie Faserverbundwerkstoffen, Kunststoffen, Prepreg-Materialien, etc. hergestellt sein. Das Endlosband läuft bevorzugt zwischen zumindest zwei Rollen um, von welchen zumindest eine angetrieben ist.

Durch die Verwendung eines endlosen Trägers, beispielsweise eines Endlosbandes oder einer Rolle bzw. Trommel, wird auch das Ablösen des Produktes von dem Träger erleichtert, da die Bewegung des Trägers einen Ablöseprozess unterstützt. So kann beispielsweise an einer geeigneten Stelle des Trägers, im Fall eines Endlosbandes beispielsweise im Bereich einer Umlenk- oder Antriebsrolle des Endlosbandes, eine Abschälvorrichtung, beispielsweise in Form einer Abziehrolle, vorgesehen sein. Auch die Trocknung des Filmes lässt sich durch Verwendung eines endlos umlaufenden Trägers wesentlich vereinfachen. So kann der Träger zumindest teilweise von einem, beispielsweise beheizten, Trocknungstunnel eingehaust sein.

Eine bevorzugte Variante der Erfindung sieht vor, dass in Schritt a) die Masse des Nanofasern enthaltenden Bioplastiks in Form eines Filmes auf die Oberfläche des Endlosbandes aufgebracht wird. Um die fließfähige Masse aus Bioplastik in Form eines Filmes aufzutragen kann eine Düse, welche beispielsweise die Form einer Schlitzdüse aufweisen und sich über die Breite des zumindest einen endlosen Trägers erstrecken kann, verwendet werden, mittels welcher die Masse an einer Auftragsstelle auf der Oberfläche des endlosen Trägers aufgetragen werden kann. Alternativ oder zusätzlich hierzu können auch andere Mittel, beispielsweise Rollen verwendet werden, welche eine gleichmäßige Verteilung der Masse auf der Oberfläche des endlosen Trägers bewirken. Auch kann der Film in Form von Tröpfchen auf die Oberfläche des Endlosbandes aufgesprüht werden. Die Herstellung von Filmen aus Nanofasern hat den Vorteil, dass sich dadurch auf einfache Weise funktionale Folien bzw. Filme schaffen lassen, die unterschiedliche Eigenschaften aufweisen können und für viele Verwendungszwecke, beispielsweise in der Textil- oder Verpackungsindustrie zum Einsatz kommen können. So können die derart hergestellten Filme eine hohe Flexibilität aufweisen und beispielsweise transparent ausgebildet sein. Durch Zusatz entsprechender Farbpigmente kann den Folien bzw. Filmen jedoch auch eine gewünschte Farbe gegeben werden. Auch lassen sich unter anderem funktionale Membrane mit spezifischen Eigenschaften herstellen.

Um den Transport und die Lagerung auch von sehr langen Folien bzw. Filmen auf einfache Weise zu ermöglichen, kann es vorgesehen sein, dass der Film aus Nanofasern enthaltendem Bioplastik nach Ablösen von der Oberfläche des endlosen Trägers zu einer Rolle aufgewickelt wird.

Die Herstellung von dickeren Folien bzw. Filmen oder auch von Platten, welche beispielsweise in der Möbelindustrie als Arbeitsplatten oder als Wandplatten an Innen- und Außenwänden von Gebäuden verwendet werden können, wird dadurch auf einfache Weise ermöglicht, dass die Masse aus Nanofasern enthaltendem Bioplastik nach Schritt a) in einer aus zumindest zwei Endlosbändern gebildeten Doppelbandanlage, beispielsweise eine Doppelbandpresse, in eine plattenförmige Form gebracht wird. Die Dicke der zu erzeugenden Platte kann auf einfache Weise durch Wahl des Abstands der beiden Bänder zueinander festgelegt werden.

In einer bevorzugten Variante der Erfindung kann es vorgesehen sein, dass in Schritt a) als Masse des Nanofasern enthaltenden Bioplastiks eine Nanozellulose enthaltende Masse, insbesondere eine Nanozellulose enthaltende Suspension, aufgebracht wird. Die Verwendung von Nanozellulose hat sich im Rahmen der vorliegenden Erfindung als besonders geeignet herausgestellt, um beispielsweise dünne Filme mit hoher Reißfestigkeit herstellen zu können.

Gemäß einer vorteilhaften Variante der Erfindung kann es vorgesehen sein, dass das zumindest eine Endlosband einen Bandkörper mit zumindest einer schraubenförmig gewickelten Lang- oder Endlosfaser aufweist und in Schritt a) die Masse aus Bioplastik auf die Oberfläche des Endlosbandes mit dem Bandkörper mit dem zumindest einen schraubenförmig gewickelten Lang- oder Endlosfaser aufgebracht wird. Diese Ausführungsform zeichnet sich dadurch aus, dass das Endlosband eine sehr hohe thermische und mechanische Stabilität aufweist und das Bioplastik bei sehr hohen Temperaturen getrocknet werden kann. Auch kann das Endlosband bei dieser Ausführungsform direkt beheizt werden, um den Trocknungsprozess zu beschleunigen. So können beispielsweise Heizfäden oder eine Flächenheizlage in das Endlosband eingearbeitet sein. Unter Langfasern werden in dem vorliegenden Zusammenhang Fasern verstanden, die eine Länge von mindestens 1 m aufweisen.

Die Erfindung samt weiteren Vorteilen wird im Folgenden anhand nicht einiger einschränkender Ausführungsbeispiele näher erläutert, welche in den Zeichnungen dargestellt sind. In diesen zeigen in schematischer Darstellung:
- Fig. 1: eine Ausführungsform einer ersten Vorrichtung zur Durchführung des erfindungsgemäßen Verfahrens und
- Fig. 2: eine Ausführungsform einer zweiten Vorrichtung zur Durchführung des erfindungsgemäßen Verfahrens.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen. Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder grösser und enden bei einer oberen Grenze von 10 oder weniger, z.B. 1 bis 1,7, oder 3,2 bis 8,1 oder 5,5 bis 10.

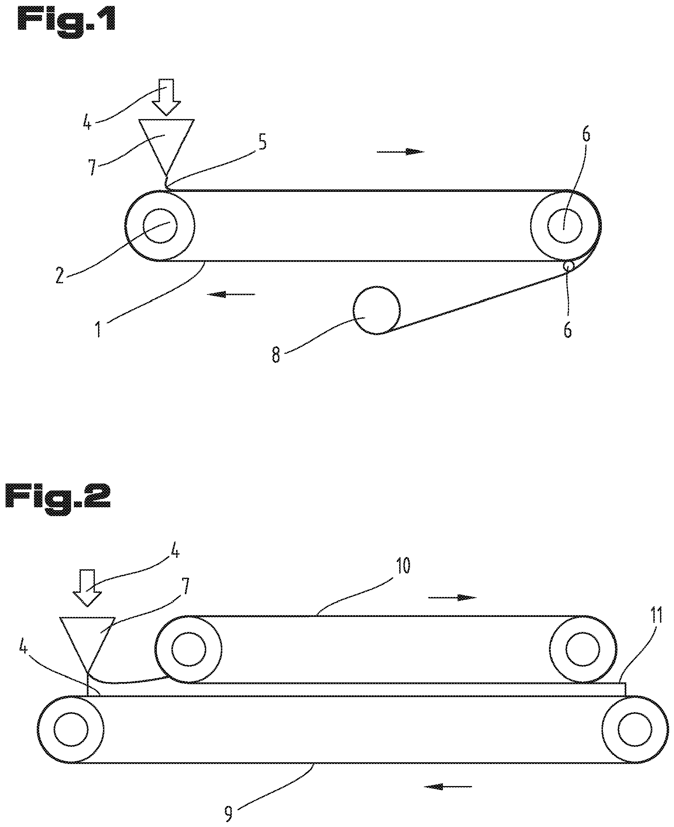

Gemäß Fig. 1 wird bei dem erfindungsgemäßen Verfahren in einem Schritt a) auf einen Träger eine Masse 4 aus Nanofasern enthaltendem Bioplastik aufgebracht. In dem dargestellten Ausführungsbeispiel wird als endloser Träger ein Endlosband 1 verwendet. An dieser Stelle sei jedoch darauf hingewiesen, dass anstelle des Endlosbandes 1 auch eine Rolle oder Trommel verwendet werden kann, auf deren Oberfläche die Masse 4 direkt aufgegossen werden kann. In weiterer Folge wird die Erfindung jedoch anhand des Endlosbandes 1 als Träger erläutert.

Das Endlosband 1 kann zwischen zwei Rollen 2 und 3 umlaufen, von welchen zumindest eine angetrieben sein kann. Die auf der Oberfläche des Endlosbandes 1 aufgebrachte Masse 4 wird in Umlaufrichtung des Endlosbandes 1 weitertransportiert. Die Umlaufrichtung des Endlosbandes 1 ist in den Figuren durch Pfeile angedeutet. Das Endlosband 1 kann beispielsweise aus Metall gefertigt sein. Alternativ hierzu kann jedoch jedes geeignete Material oder jede geeignete Materialmischung für das Endlosband 1 verwendet werden. Als besonders geeignet hat sich auch ein Endlosband 1 erwiesen, welches aus vorimprägnierten, spiralförmig gewickelten Fasern, beispielsweise Carbon-Fasern, hergestellt ist, die miteinander verklebt bzw. verschweißt sind.

Das Aufbringen der Masse 4 auf die Oberfläche des Endlosbandes 1 erfolgt kontinuierlich während sich dieses in seiner Umlaufrichtung dreht, wobei eine Gießvorrichtung 7 zum Aufbringen der Masse 4 verwendet werden kann. Die Gießvorrichtung 7 kann an ihrem dem Endlosband 1 zugewandten Endbereich, durch welchen die Masse 4 die Gießvorrichtung 7 verlässt, in Form einer Düse, beispielsweise in Form einer Schlitzdüse, ausgebildet sein. Die Masse 4 wird bevorzugt im Bereich einer Rolle 2 auf die Oberfläche des Endlosbandes 1 aufgetragen und die Gießvorrichtung 7 entsprechend angeordnet. Die Masse 4 ist in einem fließfähigen Zustand, wenn sie die Gießvorrichtung 7 verlässt, und kann sich auf der Oberfläche des Endlosbandes 1 zu einem Film 5 verteilen. Alternativ zur Verwendung der Gießvorrichtung 7 kann die Masse 4 auf die Oberfläche des Endlosbandes 1 auch aufgesprüht werden.

Die Masse 4 kann sowohl in dünnflüssiger Form als auch in zähflüssiger Form vorliegen, beispielsweise in Form eines Gels.

Der Film 5 kann nach dem Aufbringen auf das Endlosband 1 teilweise oder aber auch ganz trocknen. Hierzu kann der Film eine Trocknungsstrecke, welche beispielsweise Heizelemente und einen Trocknungstunnel umfassen kann, durchlaufen. Unter Trocknung wird hierbei ein Verdampfen von Flüssigkeit verstanden, in welcher die Nanofasern der Masse 4 verteilt sind, wenn die Masse 4 als Suspension, beispielsweise als eine Nanozellulose enthaltende Suspension, vorliegt. Als Flüssigkeit der Suspension kann jede geeignete Flüssigkeit verwendet werden, beispielsweise Wasser im Fall von Nanozellulose.

Nach Trocknen des Filmes 5 kann dieser an einer Abziehstelle von dem Endlosband 1 abgelöst werden. Dies kann beispielsweise mittels einer Abziehrolle 6 geschehen. Um ein gutes Abziehen zu ermöglichen und um eine Beschädigung des Filmes zu vermeiden, kann es vorgesehen sein, dass vor dem Aufbringen der Masse 4 ein Trennmittel auf die Oberfläche des Endlosbandes 1 aufgebracht wird. Alternativ oder zusätzlich zum Aufbringen des Trennmittels kann jedoch die Oberfläche des Endlosbandes 1 eine Antihaftstruktur, beispielsweise in Form einer aufgerauten Oberfläche, oder eine Antihaftbeschichtung, beispielsweise in Form einer Silikonbeschichtung oder eine Chrombeschichtung, aufweisen.

Nach dem Abziehen kann der Film 5 zu einer Rolle 8 aufgerollt werden, um Transport und Lagerung des Films 5 zu erleichtern. Allerdings sei an dieser Stelle angemerkt, dass der Film 5 nach dem Abziehen alternativ oder zusätzlich zu einem Aufrollen auch weiteren, hier nicht dargestellten Bearbeitungsschritten, wie weiteres Trocknen, Beschneiden etc. unterworfen sein kann.

Bei der in Fig. 2 dargestellten Ausführungsform wird die Masse 4 in Schritt a) auf ein erstes Endlosband 9 aufgebracht und durch die Bewegung des Endlosbandes 9 einer Doppelbandpresse zugeführt. In der gezeigten Ausführungsform umfasst die Doppelbandpresse das Endlosband 9 und ein Endlosband 10. Die Endlosbänder 9 und 10 können gleichartig wie das oben unter Fig. 1 beschriebene Endlosband 1 ausgebildet sein. In der Doppelbandpresse wird die Masse 4 auf die gewünschte Dicke gebracht, welche sich durch den Abstand zwischen den beiden Endlosbändern 9 und 10 bestimmt. Die Doppelbandpresse kann beheizt sein, um einen Trocknungsprozess der Masse 4 zu beschleunigen. Es kann jedoch auch der Doppelbandpresse eine Trocknungsstrecke nachgeordnet sein. Mittels der Doppelbandpresse kann die Masse 4 in eine plattenförmige Form 11 gebracht werden. Unter einer plattenförmigen Form wird hierbei sowohl ein kontinuierlicher Strang mit einer ebenen Ober und Unterseite als auch einzelne voneinander getrennte Platten verstanden. Somit lassen sich sowohl kontinuierliche Stränge als auch einzelne Platten herstellen. Die hergestellten Platten können beispielsweise im Bereich der Möbelherstellung, beispielsweise als Front- oder Arbeitsplatten, Verwendung finden. Auch als Wandverschalungen sind die hergestellten Platten verwendbar.

Der Ordnung halber sei abschließend darauf hingewiesen, dass zum besseren Verständnis des Aufbaus der zur Durchführung des erfindungsgemäßen Verfahrens verwendeten Vorrichtungen diese bzw. deren Bestandteile teilweise unmaßstäblich und/oder vergrößert und/oder verkleinert dargestellt wurden.

### Bezugszeichenaufstellung

- 1: Endlosband
- 2: Rolle
- 3: Rolle
- 4: Masse
- 5: Film
- 6: Abziehrolle
- 7: Gießvorrichtung
- 8: Rolle
- 9: Endlosband
- 10: Endlosband
- 11: Plattenförmige Form

## Patentansprüche

1. Verfahren zur Herstellung eines Produktes (11) aus einem Nanofasern natürlich nachwachsender Rohstoffe enthaltendem Bioplastik, wobei die Nanofasern einen Faserdurchmesser von weniger als 1 µm und eine Länge von bis zu 30 µm aufweisen, welches folgende Schritte umfasst:
a) Aufbringen und Verteilen einer Masse (4) des Nanofasern enthaltenden Bioplastiks in einem fließfähigen Zustand auf eine Oberfläche zumindest eines sich in einer Umlaufrichtung bewegenden Endlosbandes, wobei die Masse (4) aus Bioplastik in Schritt a) auf die Oberfläche des zumindest einen Endlosbandes aufgesprüht oder aufgegossen wird, und
b) Transportieren der auf der Oberfläche des zumindest einen Endlosbandes (1, 9) aufgebrachten und verteilten Masse (4) des Nanofasern enthaltenden Bioplastiks in Umlaufrichtung des zumindest einen Endlosbandes, wobei es die weiteren Schritte umfasst:
c) zumindest teilweises Trocknen der auf dem zumindest einen Endlosband aufgebrachten und verteilten Masse (4) des Nanofasern enthaltenden Bioplastiks während eines Transportes der verteilten und aufgebrachten Masse (4) aus Nanofasern enthaltenden Bioplastik auf dem zumindest einen Endlosband ,
d) Ablösen der zumindest teilweise getrockneten Masse (4) des Nanofasern enthaltenden Bioplastiks von der Oberfläche des Endlosbandes, während sich das Endlosband in Umlaufrichtung bewegt **dadurch gekennzeichnet, dass** das Endlosband aus Metall gefertigt ist und in Schritt a) die Masse (4) aus Bioplastik auf die Oberfläche des aus Metall gefertigten Endlosbandes (1, 9) aufgebracht wird.

2. Verfahren nach Anspruch 1, **dadurch gekennzeichnet, dass** in Schritt a) die Masse (4) des Nanofasern enthaltenden Bioplastiks in Form eines Filmes (5) auf die Oberfläche des zumindest einen Endlosband aufgebracht wird.

3. Verfahren nach Anspruch 2, **dadurch gekennzeichnet, dass** der Film (5) des Nanofasern enthaltenden Bioplastiks nach Ablösen von der Oberfläche des Endlosbandes zu einer Rolle (8) aufgewickelt wird.

4. Verfahren nach einem der Ansprüche 1 bis 3, **dadurch gekennzeichnet, dass** die Masse (4) des Nanofasern enthaltenden Bioplastiks nach Schritt a) in einer zumindest zwei Endlosbänder (9, 10) umfassende Doppelbandanlage, beispielsweise eine Doppelbandpress, in eine plattenförmige Form (11) gebracht wird.

5. Verfahren nach einem der Ansprüche 1 bis 4, **dadurch gekennzeichnet, dass** in Schritt a) als Masse (4) des Nanofasern enthaltenden Bioplastiks eine Nanozelluloseenthaltende Masse, insbesondere eine Nanozelluloseenthaltende Suspension, aufgebracht wird.

6. Verfahren nach einem der Ansprüche 1 bis 5 , **dadurch gekennzeichnet, dass** das zumindest eine Endlosband (1, 9) einen Bandkörper mit zumindest einer schraubenförmig gewickelten lang- oder Endlosfaser aufweist und in Schritt a) die Masse (4) aus Bioplastik auf die Oberfläche des Endlosbandes (1, 9) mit dem Bandkörper mit der zumindest einen schraubenförmig gewickelten Lang- oder Endlosfaser, die eine Länge von mindestens 1 m aufweist, aufgebracht wird.

## Claims

1. A method for the manufacture of a product (11) from a bioplastic containing nanofibres of a naturally renewable raw material, wherein the nanofibres have a fibre diameter of less than 1 µm and a length of up to 30 µm, which comprises the following steps:
a) applying and distributing a mass (4) of the bioplastic containing nanofibres in a free-flowing state to a surface of at least one continuous belt moving in a revolutionary course, wherein in step a), the mass (4) formed from bioplastic is sprayed or poured onto the surface of the at least one continuous belt, and
b) transporting the mass (4) of bioplastic containing nanofibres applied to and distributed over the surface of the at least one continuous belt (1, 9) in the direction of revolution of the at least one continuous belt, wherein it comprises the further steps of:
c) at least partially drying the mass (4) of bioplastic containing nanofibres applied to and distributed over the at least one continuous belt during transport of the distributed and applied mass (4) formed from the bioplastic containing nanofibres on the at least one continuous belt,
d) detaching the at least partially dried mass (4) of the bioplastic containing nanofibres from the surface of the continuous belt while the continuous belt is moved in the direction of revolution, **characterized in that** the continuous belt is fabricated from metal and in step a), the mass (4) formed from bioplastic is applied to the surface of the continuous belt (1, 9) fabricated from metal.

2. The method as claimed in claim 1, **characterized in that** in step a), the mass (4) of the bioplastic containing nanofibres is applied to the surface of the at least one continuous belt in the form of a film (5).

3. The method as claimed in claim 2, **characterized in that** the film (5) of the bioplastic containing nanofibres is wound into a roll (8) following detachment from the surface of the continuous belt.

4. The method as claimed in one of claims 1 to 3, **characterized in that** after step a), the mass (4) of the bioplastic containing nanofibres is shaped into board form (11) in a double belt unit, for example a double belt press, comprising at least two continuous belts (9, 10).

5. The method as claimed in one of claims 1 to 4, **characterized in that** in step a), a nanocellulose-containing mass, in particular a nanocellulose-containing suspension, is applied as the mass (4) of the bioplastic containing nanofibres.

6. The method as claimed in one of claims 1 to 5, **characterized in that** the at least one continuous belt (1, 9) comprises a belt body with at least one spirally wound long or continuous fibre, and in step a), the mass (4) formed from bioplastic is applied to the surface of the continuous belt (1, 9) with the belt body with the at least one spirally wound long or continuous fibre which is at least 1 m in length.

## Revendications

1. Procédé pour la préparation d'un produit (11) à partir d'un bioplastique comprenant des nanofibres de matières premières naturelles renouvelables, les nanofibres présentant un diamètre de fibres inférieur à 1 µm et une longueur allant jusqu'à 30 µm, lequel comprend les étapes suivantes:
a) application et répartition d'une masse (4) du bioplastique comprenant des nanofibres dans un état fluide sur une surface d'au moins une bande sans fin se déplaçant dans une direction circonférentielle, la masse (4) de bioplastique étant, dans l'étape a), pulvérisée ou coulée sur la surface de la bande sans fin au moins au nombre de un, et
b) transport de la masse (4), appliquée et répartie à la surface de la bande sans fin (1, 9) au moins au nombre de un, du bioplastique comprenant des nanofibres dans la direction circonférentielle de la bande sans fin au moins au nombre de un, comprenant les étapes supplémentaires:
c) séchage au moins partiel de la masse (4), appliquée et répartie sur la bande sans fin au moins au nombre de un, du bioplastique comprenant des nanofibres pendant un transport de la masse (4), appliquée et répartie, du bioplastique comprenant des nanofibres à la surface de la bande sans fin au moins au nombre de un,
d) détachement de la masse (4), séchée au moins partiellement, du bioplastique comprenant des nanofibres par rapport à la surface de la bande sans fin pendant que la bande sans fin se déplace dans la direction circonférentielle, **caractérisé en ce que** la bande sans fin est fabriquée en métal et **en ce que**, dans l'étape a), la masse (4) de bioplastique est appliquée sur la surface de la bande sans fin (1, 9) fabriquée en métal.

2. Procédé selon la revendication 1, **caractérisé en ce que**, dans l'étape a), la masse (4) du bioplastique comprenant des nanofibres est appliquée sous forme d'un film (5) sur la surface de la bande sans fin au moins au nombre de un.

3. Procédé selon la revendication 2, **caractérisé en ce que** le film (5) du bioplastique comprenant des nanofibres est enroulé en un rouleau (8) après le détachement par rapport à la surface de la bande sans fin.

4. Procédé selon l'une des revendications 1 à 3, **caractérisé en ce que**, après l'étape a), la masse (4) du bioplastique comprenant des nanofibres est, dans une installation à bande double comprenant au moins deux bandes sans fin (9, 10), par exemple une presse à double bande, amenée à adopter une forme de plaque (11).

5. Procédé selon l'une des revendications 1 à 4, **caractérisé en ce que**, dans l'étape a), une masse comprenant de la nanocellulose, en particulier une suspension comprenant de la nanocellulose, est appliquée en tant que masse (4) du bioplastique comprenant des nanofibres.

6. Procédé selon l'une des revendications 1 à 5, **caractérisé en ce que** la bande sans fin (1, 9) au moins au nombre de un présente un corps de bande avec au moins une fibre longue ou continue enroulée en forme d'hélice et, dans l'étape a), la masse (4) de bioplastique est appliquée sur la surface de la bande sans fin (1, 9) avec le corps de bande avec la fibre longue ou continue enroulée en forme d'hélice au moins au nombre de un qui présente une longueur d'au moins 1 m.
